# EUROPÄISCHE PATENTSCHRIFT

(11) **EP 3 789 864 B1**
(45) Veröffentlichungstag und Bekanntmachung des Hinweises auf die Patenterteilung: **05.11.2025**
(21) Anmeldenummer: 19195786.9
(22) Anmeldetag: 06.09.2019
(51) Int. Cl.: G06F 11/3668, G06F 11/3698

(54) **VERFAHREN ZUM TESTEN EINER STEUERUNGSSOFTWARE EINES STEUERGERÄTS**
METHOD FOR TESTING A CONTROL SOFTWARE OF A CONTROL DEVICE
PROCÉDÉ D'ESSAI D'UN LOGICIEL DE COMMANDE D'UN APPAREIL DE COMMANDE

(43) Veröffentlichungstag der Anmeldung: 10.03.2021
(73) Patentinhaber: dSPACE GmbH, 33102 Paderborn (DE)
(72) Erfinder: Gretenkord, Jörg, 33102 Paderborn (DE)

(56) Entgegenhaltungen:
- EP-A1- 2 942 678
- CN-A- 109 542 385
- MANSMANN FLORIAN ET AL: "StreamSqueeze: a dynamic stream visualization for monitoring of event data", VISUALIZATION AND DATA ANALYSIS 2012, SPIE, 1000 20TH ST. BELLINGHAM WA 98225-6705 USA, vol. 8294, no. 1, 22 January 2012 (2012-01-22), pages 1 - 12, XP060001023, [retrieved on 20120124], DOI: 10.1117/12.912372
- ANONYMOUS ET AL: "CSCI 103 - Homework 1", CSCI 103, 1 January 2023 (2023-01-01), pages 1 - 19, XP093079423, Retrieved from the Internet <URL:https://bytes.usc.edu/cs103/assignments/hw1.html> [retrieved on 20230906]
- MACVEIGH DONAL T.: "Effect of data representation on cost of sparse matrix operations", ACTA INFORMATICA, 1 January 1977 (1977-01-01), Berlin/Heidelberg, pages 361 - 394, XP093079468, ISSN: 0001-5903, Retrieved from the Internet <URL:https://link.springer.com/content/pdf/10.1007/BF00289469.pdf?pdf=inline%20link> [retrieved on 20230906], DOI: 10.1007/BF00289469

## Beschreibung

Die Erfindung betrifft ein Verfahren zum Testen einer Steuerungssoftware eines Steuergeräts, wobei das Steuergerät Datenströme zur Auswertung bereitstellt.

Für Funktionstests von Steuerungssoftware von Steuergeräten und insbesondere von elektronischen Steuergeräten kann grundsätzlich Hardware in Form des Steuergerätes oder in Form eines Steuergeräteprototyps eingesetzt und die Steuerungssoftware in der realen Umgebung, beispielsweise bei einem Fahrversuch, getestet werden.

Weiterhin bieten sich sogenannte Hardware-in-the-Loop (HiL) Tests an, bei dem das Steuergerät über Ein- und Ausgänge an einen HiL-Simulator angeschlossen wird, wobei der HiL-Simulator die reale Umgebung nachbildet. Der HiL-Simulator emuliert die elektrischen Signale von Sensoren und Aktoren, die vom Steuergerät gelesen werden. Beispielsweise werden bei einem HiL-Test eines Verbrennungsmotors die Signale von Kurbel- und Nockenwellensensoren von einer Angular Processing Unit (APU) erzeugt, die Teil der Hardware des HiL-Simulators ist. Das Steuergerät wiederum generiert auf Basis dieser Signale mittels der Steuerungssoftware Sensor- und/oder Aktorsteuersignale, die wiederum zu einer Änderung der elektrischen Signale im HiL-Simulator führen.

Bei Funktionstests der Steuerungssoftware egal welcher Art wird also eine Vielzahl an Signalen generiert und übermittelt, deren zeitlicher Verlauf in Form von Daten und/oder Datenströmen erfasst wird, um Schwachstellen an der Steuerungssoftware erkennen bzw. Verbesserungen vornehmen zu können. Beispielsweise werden bei Funktionstests der Steuerungssoftware eines Steuergerätes eines Fahrzeuges bis zu 100.000 Signale vom Fahrzeug an das Steuergerät übermittelt. Die Analyse und Auswertung der Datenströme umfasst in der Regel ein geeignetes grafisches Darstellen der Datenströme, so dass ein Nutzer Zugang zu den Daten erhält und Schlussfolgerungen aus den Daten ziehen kann. Da die Datenströme oftmals zeitliche veränderliche Daten umfassen, kann ein grafisches Darstellen der Datenströme in sinnvoller Weise nur durch Darstellen der Datenströme in einem Anzeigebereich einer grafischen Benutzeroberflächen eines Rechners umgesetzt werden.

Bei Anwendungen auf dem Rechner, die sehr viele Darstellungen im Anzeigebereich erfordern, kann sich allerdings die Problematik ergeben, dass das Betriebssystem des Rechners die dazu erforderliche Rechenleistung nicht mehr erbringen kann, und es zu einem Absturz des Betriebssystems kommt oder zumindest dazu, dass keine neuen Darstellungen im Anzeigebereiche mehr erzeugt werden können. Weiterhin ist es eine Herausforderung bei der Vielzahl an Datenströme, die beim Testen der Steuerungssoftware übermittelt werden, die Übersichtlichkeit der Darstellung der Datenströme zu wahren und dem Nutzer trotzdem die Möglichkeit zu geben die Darstellung der Datenströme zwecks Analyse und Auswertung der Datenströme zu verändern.

CN109542385A beschreibt eine Anzeigemethode, System, Gerät und lesbares Speichermedium zur gleichzeitigen Anzeige von mehrere Datenströmen auf einem Bildschirm. Dazu werden alle Datenströme, auf die ein Auswahlfilter zutrifft in einem File zwischengespeichert und dann die Werte des Files im Anzeigebereich angezeigt. Dieses Verfahren berücksichtigt nicht Echtzeit-Messdaten und die fortlaufende Bereitstellung einer hohen Anzahl an Datensätzen ohne weitere Verwendung von Auswahlfiltern.

Eine solche Problematik stellt sich z.B. bei der Darstellung von Datenströmen für Echtzeit-Messdaten bei Hardware-in-the-Loop Anwendungen. Hier ist es mitunter erforderlich, eine große Anzahl von verschiedenen Datenströmen grafisch darzustellen. In der Praxis hat sich gezeigt, dass unter Microsoft Windows die Anwendungsmöglichkeiten von Visualisierungs- und Experimentiersoftware, wie des Produktes "ControlDesk" der Anmelderin, nicht voll ausgeschöpft werden können, da die bisher eingesetzte Verwaltung der Darstellung der Datenströme sowie die bisher verwendete Art die grafische Darstellung zu generieren, zu wenig ressourcenschonend und somit zu rechenintensiv sind.

Bei "ControlDesk" handelt es sich um eine Software, die unter anderem zur Visualisierung von Bussystemen wie CAN, LIN, Flexray und Ethernet auf einem Computersystem dient. Insbesondere bei der Verwendung mit Ethernet ist dabei ein sehr hohes Datenaufkommen möglich, wodurch die Analyse und Auswertung der Datenströme auch eine Vielzahl an grafischen Darstellungen erfordert.

Ausgehend von dieser Problematik ist es Aufgabe der Erfindung, ein Verfahren zum Testen einer Steuerungssoftware eines Steuergeräts bereitzustellen, das die oben beschriebenen Nachteile vermeidet. Insbesondere soll ein effizienter und ressourcenschonender Zugang zu den vom Steuergerät bereitgestellten Datenströmen ermöglicht werden.

Diese Aufgabe wird durch den Gegenstand des Patentanspruchs 1 gelöst. Bevorzugte Weiterbildungen finden sich in den Unteransprüchen.

Erfindungsgemäß ist somit ein Verfahren zum Testen einer Steuerungssoftware eines Steuergeräts vorgesehen, wobei das Steuergerät Datenströme zur Auswertung bereitstellt, mit den Schritten:
- Generieren einer ersten und zweiten Baumstruktur zum Darstellen der Datenströme in einem Anzeigebereich in einer tabellenartigen Anordnung, aufweisend eine Mehrzahl von Zeilen und eine Mehrzahl von Spalten, wobei
   -- die erste Baumstruktur eine erste mehrdimensionale Liste umfasst,
   -- die erste mehrdimensionale Liste eine Mehrzahl an Zeilen-Elementlisten umfasst,
   -- die Zeilen-Elementlisten eine Mehrzahl von Elementen umfassen,
   -- jedes Element in der Zeilen-Elementliste mit einem Datenstrom verknüpft ist,
   -- das Element definiert, in welcher Spalte der Datenstrom dargestellt wird, mit dem das Element verknüpft ist, wobei
   -- die zweite Baumstruktur eine zweite mehrdimensionale Liste umfasst,
   -- die zweite mehrdimensionale Liste eine Mehrzahl an Spalten-Elementlisten umfasst,
   -- die Spalten-Elementlisten die Mehrzahl von Elementen umfassen,
   -- das Element definiert, in welcher Zeile der Datenstrom dargestellt wird, mit dem das Element verknüpft ist, und
- Darstellen der Datenströme auf Basis der ersten und zweiten Baumstruktur.

Bevorzugt wird unter Darstellen der Datenströme verstanden, dass die Datenströme grafisch in einer solchen Form dargestellt werden, dass ein Nutzer des Verfahrens auf diese Weise über die Datenströme informiert wird und Zugang zu ihren Werten erhält. Bevorzugt umfassen die Datenströme zeitlich veränderliche Daten. Somit wird dem Nutzer durch das Verfahren ermöglicht, die Datenströme zu analysieren und auszuwerten, was in der Regel beim Testen der Steuerungssoftware des Steuergeräts erforderlich ist.

Das erfindungsgemäße Verfahren bildet somit die Grundlage für eine Verarbeitung der Datenströme, wobei das Verfahren die Leistung eines Rechners effizient nutzt und somit Nachteile wie ein Absturz des Betriebssystems vermieden werden. Des Weiteren wird durch das Verfahren das Risiko verringert, dass die Rechenleistung nicht ausreichend hoch ist, um noch einen weiterer Datenstrom darzustellen.

Das Verfahren sieht vor, dass zum Darstellen der Datenströme in dem Anzeigebereich in der tabellenartigen Anordnung die erste und zweite Baumstruktur generiert wird. Diese Baumstrukturen ermöglichen, die tabellenartige Anordnung der Darstelllungen der Datenströme auf besonders effiziente Weise zu erzeugen und zu verwalten. Die erste Baumstruktur umfasst die erste mehrdimensionale Liste. Unter einer Liste ist eine Datenstruktur-Variante zu verstehen, bei der viele gleichartig strukturierte Daten, im vorliegenden Fall die Zeilen-Elementlisten akkumuliert werden. Der Zugriff auf die gleichartig strukturierten Daten, also der Zugriff auf die Zeilen-Elementlisten, erfolgt mit Hilfe von Indizes, die die Position der Zeilen-Elementlisten in der mehrdimensionalen Liste bezeichnen. Mehrdimensional bedeutet im vorliegenden Fall, dass die Dimension der Liste größer als Eins ist. In anderen Worten handelt es sich bei der ersten mehrdimensionalen Liste wenigstens um eine zwei-dimensionale Datenstruktur. Die erste mehrdimensionale Liste umfasst ihrerseits die Mehrzahl an Zeilen-Elementlisten. Auch die Zeilen-Elementlisten sind Listen. Die gleichartig strukturierten Daten der Zeilen-Elementlisten sind die Elemente, wobei sich die Elemente mit einem Datenstrom verknüpfen lassen. In anderen Worten repräsentieren die Elemente den Zugang zu einem spezifischen Datenstrom. Das Verfahren sieht nun vor, dass in der ersten Baumstruktur das jeweilige Element definiert, in welcher Spalte der tabellenartigen Anordnung der Datenstrom dargestellt wird, mit dem das Element verknüpft ist. Es wird also nicht aufgrund des Index des Elementes in der Zeilen-Elementliste definiert, in welcher Spalte der Datenstrom angezeigt wird, sondern das Element selbst definiert in welcher Spalte der mit dem Element verknüpfte Datenstrom dargestellt wird. Die Reihenfolge der Elemente in der Zeilen-Elementliste ist somit für die Darstellung in der tabellenartigen Anordnung nicht ausschlaggebend. Die Länge der Zeilen-Elementliste muss auch nicht mit der Anzahl Spalten der tabellenartigen Anordnung übereinstimmen. Insbesondere kann die Zeilen-Elementliste bei tabellenartigen Anordnungen, die leere Zellen aufweisen, eine kürzer Länge aufweisen, als die Anzahl Spalten. Leere Zellen bedeutet bevorzugt im Sinne der Erfindung, dass aktuell in dieser Zelle der tabellenartigen Anordnung kein Datenstrom dargestellt wird oder dass dessen Darstellung ausgeblendet ist. Bevorzugt lässt sich in den Elementen nicht nur definieren in welcher Spalte der mit dem Element verknüpfte Datenstrom dargestellt wird, sondern auch weitere Eigenschaften der Darstellung des Datenstroms.

Die zweite Baumstruktur sieht analog zur ersten Baumstruktur vor, dass das Element definiert, in welcher Zeile der Datenstrom dargestellt wird, mit dem das Element verknüpft ist. Es wird also nicht aufgrund des Index des Elementes in der Spalten-Elementliste definiert, in welcher Zeile der Datenstrom mit dem das Element verknüpft ist, angezeigt wird, sondern das Element selbst definiert in welcher Zeile der mit dem Element verknüpfte Datenstrom dargestellt wird. Die Reihenfolge der Elemente in der Spalten-Elementliste ist somit für die Darstellung in der tabellenartigen Anordnung nicht ausschlaggebend. Die Länge der Spalten-Elementliste muss auch nicht mit der Anzahl Zeilen der tabellenartigen Anordnung übereinstimmen. Insbesondere kann die Spalten-Elementliste bei tabellenartigen Anordnungen, die leere Zellen aufweisen, eine kürzere Länge aufweisen, als die Anzahl Zeilen.

Die erste und zweite Baumstruktur ermöglichen somit eine hohe Flexibilität, beim Aufbau der tabellenartigen Anordnung, da die Länge der Zeilen-Elementliste und die Länge der Spalten-Elementliste nicht mit der Anzahl Zeilen und Spalten der tabellenartigen Anordnung korrelieren muss. Genauso muss die Reihenfolge der Elemente innerhalb der Zeilen-Elementliste nicht mit der Reihenfolge der Darstellungen innerhalb einer Zeile der tabellenartigen Anordnung korrelieren und die Reihenfolge der Elemente innerhalb der Spalten-Elementliste muss nicht mit der Reihenfolge der Darstellungen innerhalb einer Spalte der tabellenartigen Anordnung korrelieren. Dies ermöglicht eine effiziente Verwaltung der dargestellten Datenströme, da nur tatsächlich dargestellte Datenströme verwaltet werden. Leere Zellen, leere Zeilen und/oder leere Spalten in der tabellenartigen Anordnung führen insbesondere nicht dazu, dass Speicher belegt wird.

Grundsätzlich entspricht die Anzahl an Elementen in der Zeilen-Elementliste der Anzahl Datenströme, die in der entsprechenden Zeile der Anordnung darzustellen sind bzw. aktuell dargestellt werden und die Anzahl an Elementen in der Spalten-Elementliste entspricht der Anzahl Datenströme, die in der entsprechenden Spalte der Anordnung darzustellen sind bzw. aktuell dargestellt werden. Allerdings ermöglicht die erste und zweite Baumstruktur ein ressourcenschonendes Verwalten der Darstellungen der Datenströme, da in dynamischer Weise und ohne vorherige Festlegung immer nur die interessierenden Datenströme angezeigt werden können und die Datenübertragung für die nicht angezeigten Datenströme unterbrochen werden kann. Somit ermöglicht das Verfahren einen effizienten und ressourcenschonenden Zugang zu den vom Steuergerät bereitgestellten Datenströmen.

Im Hinblick auf den erwähnten effizienten Zugang zu den Datenströmen sieht eine bevorzugte Weiterbildung der Erfindung vor, dass das Element über einen Verknüpfungszustand mit dem Datenstrom definiert, ob Daten dieses Datenstromes vom Steuergerät übertragen werden. Alternativ oder zusätzlich umfasst das Verfahren in einer bevorzugten Weiterbildung die folgenden Schritte:
- Verknüpfen des Elementes mit dem Datenstrom, und
- Übertragen der Daten vom Steuergerät für diesen Datenstrom.
In anderen Worten bedeutet dies bevorzugt, dass ein Verknüpfen des Elementes zum Übertragen von Daten des mit dem Element verknüpften Datenstroms führt. Bevorzugt gibt der Verknüpfungszustand wieder, ob das Element aktuell mit dem Datenstrom verknüpft ist oder die Verknüpfung mit dem Datenstrom aktuell nicht besteht. Insbesondere ist vorgesehen, dass ein Nutzer den Verknüpfungszustand des Elementes ändern kann. Nur wenn eine Verknüpfung des Datenstroms zum Element aktuell besteht, werden die Daten für diesen Datenstrom vom Steuergerät übertragen.

In diesem Zusammenhang ist in einer weiteren bevorzugten Weiterbildung der Erfindung vorgesehen, dass ein Ausblenden eines dargestellten Datenstroms zum Lösen der Verknüpfung des mit dem Element verknüpften Datenstroms im Element führt. Das Verfahren umfasst also bevorzugt die folgenden Schritte:
- Lösen der Verknüpfung des mit dem Element verknüpften Datenstroms im Element, und
- Unterbrechen der Datenübertragung vom Steuergerät für diesen Datenstrom.

Somit lässt sich darüber eine Einblendbarkeit bzw. Ausblendbarkeit und/oder ein Einklappen bzw. Ausklappen der Darstellung des Datenstroms in der tabellenartigen Anordnung im Anzeigebereich ermöglichen, die besonders ressourcenschonenden ist. Die Daten für den Datenstrom werden vom Steuergerät nur übertragen wenn, die Verknüpfung des Elementes mit dem Datenstrom besteht. Sobald eine Darstellung des Datenstroms für den Nutzer nicht mehr sichtbar ist, wird die Verknüpfung des Elementes mit dem Datenstrom gelöst und die Daten nicht mehr übertragen. Insbesondere wird die generelle Struktur der tabellenartigen Anordnung durch das Ausblenden einer Darstellung eines Datenstroms in der tabellenartigen Anordnung nicht beeinflusst, denn das Element mit dem der Datenstrom verknüpft ist definiert in welcher Zeile bzw. Spalte der Datenstrom darzustellen ist. Das Element und darüber der mit dem Element verknüpfte Datenstrom behält somit seine Zeilen-Spalten-Beziehung innerhalb der tabellenartigen Anordnung, auch wenn der Datenstrom nicht dargestellt wird. Dies ermöglicht auf einfache Weise ein zellenweises Ausblenden der Darstellungen der Datenströme in der tabellenartigen Anordnung. Es ist also nicht erforderlich, ganze Spalten und/oder Zeilen auszublenden. Somit wird dem Nutzer ermöglicht dynamisch und zellenweise nur die Datenströme auf übersichtliche Weise darzustellen, die für die Analyse und Auswertung der Daten aktuell erforderlich sind. Bevorzugt ist vorgesehen, dass ein Ausblenden und/oder Einblenden bzw. ein Ausklappen und/oder Einklappen einer Darstellung eines Datenstroms vom Nutzer getriggert werden kann.

Die erste und zweite Baumstruktur ermöglichen nicht nur einen effizienten Zugang zu den vom Steuergerät bereitgestellten Datenströmen, sondern auch eine übersichtliche tabellenartige Anordnung. In diesem Zusammenhang ist in einer bevorzugten Weiterbildung der Erfindung vorgesehen, dass ein Verändern der tabellenartigen Anordnung der Datenströme durch einen Nutzer zu einer Änderung in der ersten und/oder zweiten Baumstruktur führt, ein Verändern der Darstellung eines Datenstroms in der tabellenartigen Anordnung durch einen Nutzer zu einer Veränderung in dem mit dem Datenstrom verknüpften Element führt, eine Änderung in der ersten und/oder zweiten Baumstruktur zu einer Veränderung in der tabellenartigen Anordnung der Datenströme führt, und/oder eine Änderung in dem mit dem Datenstrom verknüpften Element zu einer Veränderung der Darstellung des mit dem Element verknüpften Datenstroms in der tabellenartigen Anordnung führt.

Unter Verändern der tabellenartigen Anordnung durch den Nutzer ist bevorzugt zu verstehen, dass der Nutzer durch sein Handeln, beispielsweise durch eine Drag&Drop-Aktion, ein Verändern der tabellenartigen Anordnung verursacht. Unter Verändern der tabellenartigen Anordnung ist weiter bevorzugt ein Versschieben einer Darstellung eines Datenstroms von einer Zelle in eine andere Zelle zu verstehen. Bei einem Verschieben ändern sich also die Spalten- und/oder Zeilenbeziehungen der Darstellungen in der tabellenartigen Anordnung zueinander.

Weiterhin ist unter Verändern der tabellenartigen Anordnung bevorzugt ein Hinzufügen oder Entfernen von Darstellungen von Datenströmen zu verstehen. Bei einem Hinzufügen bzw. Entfernen wird die tabellenartige Anordnung um weitere Zeilen und/oder Spalten ergänzt bzw. verkleinert. Die Zeilen und/oder Spalten können bevorzugt nicht nur am Rand der tabellenartigen Anordnung, sondern auch innerhalb der tabellenartigen Anordnung hinzugefügt und/oder entfernt werden. In anderen Worten bedeutet dies, dass es aufgrund der ersten und zweiten Baumstruktur nicht notwendig, dass die Darstellungen der Datenströme in der tabellenartigen Anordnung zeilenweise oder spaltenweise aufgebaut werden.

Durch ein Hinzufügen oder Entfernen von Darstellungen von Datenströmen können sich also die Spalten- und/oder Zeilenbeziehungen der Darstellungen in der tabellenartigen Anordnung zueinander ändern. Die veränderten Spalten- und/oder Zeilenbeziehungen der Darstellungen in der tabellenartigen Anordnung zueinander werden bevorzugt in der ersten und/oder zweiten Baumstruktur abgebildet. Die erste und/oder zweite Baumstruktur wird also kontinuierlich gepflegt, und spiegelt jeweils immer die aktuelle tabellenartige Anordnung wieder.

Wenn beispielsweise eine weitere Darstellung eines Datenstroms vom Nutzer hinzugefügt wird, wird die entsprechende Zeilen-Elementliste der ersten Baumstruktur um ein Element, welches mit diesem Datenstrom verknüpft ist, erweitert. Analoges gilt für die entsprechende Spalten-Elementliste der zweiten Baumstruktur. Dabei ist es egal, ob das zusätzliche Element in der Zeilen-Elementliste bzw. in der Spalten-Elementliste am Anfang, am Ende oder irgendwo in der Mitte der Zeilen-Elementliste bzw. Spalten-Elementliste hinzugefügt wird. In anderen Worten ist der Index des hinzugefügten Elementes in der Zeilen-Elementliste bzw. Spalten-Elementliste nicht relevant, da der Index nicht definiert, wo der mit dem Element verknüpfte Datenstrom in der tabellenartigen Anordnung dargestellt wird.

Beim Verschieben von Darstellungen von Datenströmen ist zu beachten, dass sich nicht zwingend beide Baumstrukturen ändern. Wenn beispielsweise eine Darstellung eines Datenstroms in einer Zelle innerhalb der gleichen Zeile von einer Spalte zu einer anderen Spalte verschoben wird, ändert sich an der entsprechenden Zeilen-Elementliste der ersten Baumstruktur bevorzugt nichts, da sich die Darstellung des Datenstroms immer noch in der gleichen Zeile der tabellenartigen Anordnung befindet. Stattdessen ändert sich in diesem Beispiel die zweite Baumstruktur, da der Datenstrom nun in einer anderen Spalte dargestellt wird. In der zweiten Baumstruktur wird also bevorzugt das Element aus der Spalten-Elementliste, die die frühere Spalte repräsentiert entfernt, dafür in der Spalten-Elementliste, die die aktuelle Spalte repräsentiert hinzugefügt.

Bevorzugt kommt es bei einem Verschieben auch zu einer Änderung in dem mit dem Datenstrom verknüpften Element. Im obigen Beispiel ändert sich bevorzugt in der entsprechenden Zeilen-Elementliste der ersten Baumstruktur zwar nichts, allerdings ändert sich bevorzugt das Element in der Zeilen-Elementliste, das mit dem Datenstrom verknüpft ist. Diesbezüglich ändert das entsprechende Element bevorzugt eine Information, die definiert, in welcher Spalte der mit dem Element verknüpfte Datenstrom dargestellt wird und passt diese Information entsprechend der neuen Spalte an.

Unter Verändern der Darstellung des Datenstroms in der tabellenartigen Anordnung durch den Nutzer ist bevorzugt zu verstehen, dass der Nutzer durch sein Handeln, beispielsweise durch eine Mausbewegung oder durch einen Mausklick, das Verändern der Darstellung des Datenstroms verursacht. Unter Verändern der Darstellung des Datenstroms ist weiter bevorzugt die konkrete Art der Darstellung des Datenstroms zu verstehen. Dies umfasst bevorzugt eine Höhe der Darstellung, eine Breite der Darstellung, eine Farbe der Darstellung, eine Auflösung der Darstellung und/oder eine Transparenz der Darstellung. Bevorzugt führt also ein Verändern der Darstellung des Datenstroms zu einer Veränderung in dem mit dem Datenstrom verknüpften Element. Dies bedeutet insbesondere auch, dass ein Verändern der Darstellung des Datenstroms nicht zu einer Veränderung in der ersten und/oder zweiten Baumstruktur führt. Bevorzugt ist vorgesehen, dass das Element, das mit dem Datenstrom verknüpft ist, Informationen hinsichtlich der Art der Darstellung des verknüpften Datenstroms umfasst. Dabei handelt es sich bevorzugt um Information hinsichtlich der Höhe der Darstellung, der Breite der Darstellung, der Farbe der Darstellung, der Auflösung der Darstellung und/oder der Transparenz der Darstellung. Wenn die Darstellung des Datenstroms durch den Nutzer nun verändert wird, werden diese Informationen bevorzugt im Element aktualisiert und an die vom Nutzer gewählten Werte angepasst. Weiter bevorzugt umfasst das Element Informationen hinsichtlich Grenzwerte für die Höhe der Darstellung, die Breite der Darstellung, die Auflösung der Darstellung und/oder die Transparenz der Darstellung, die nicht überschritten und/oder unterschritten werden sollen. Diese Grenzwerte können vom Nutzer definiert sein oder in Abhängigkeit des verknüpften Datenstrom oder des aktuellen Wertes des Datenstroms generierte werden.

Bisher wurde aufgezeigt, dass der Nutzer die tabellenartige Anordnung der Datenströme und/oder die Darstellung des Datenstroms in der tabellenartigen Anordnung verändern kann und dies zu einer Änderung in der ersten und/oder zweiten Baumstruktur führt und/oder zu einer Änderung im Element führt. Umgekehrt führt aber bevorzugt auch eine Änderung in der ersten und/oder zweiten Baumstruktur zu einer Veränderung in der tabellenartigen Anordnung der Datenströme. Weiterhin führt bevorzugt eine Änderung in dem mit dem Datenstrom verknüpften Element zu einer Veränderung der Darstellung des mit dem Element verknüpften Datenstroms in der tabellenartigen Anordnung.

Bevorzugt umfasst das Verfahren also die zusätzlichen Schritte:
- Verändern der tabellenartigen Anordnung der Datenströme und
- Anpassen der ersten und/oder zweiten Baumstruktur an die veränderte tabellenartige Anordnung, und/oder
- Ändern der ersten und/oder zweiten Baumstruktur
- Anpassen der tabellenartigen Anordnung der Datenströme an die geänderte erste und/oder zweite Baumstruktur.

Weiter bevorzugt umfasst das Verfahren also die zusätzlichen Schritte:
- Verändern der Darstellung des Datenstroms in der tabellenartigen Anordnung und
- Anpassen des mit dem Datenstrom verknüpften Elementes an die veränderte Darstellung, und/oder
- Ändern des mit einem Datenstrom verknüpften Elementes, und
- Anpassen der Darstellung des mit dem Element verknüpften Datenstroms in der tabellenartigen Anordnung an das geänderte Element.

Das Ändern des Elementes kann bevorzugt von dem mit dem Element verknüpften Datenstrom verursacht werden. Bevorzugt umfass der Schritt Ändern des mit dem Datenstrom verknüpften Elementes, also ein Ändern des mit dem Datenstrom verknüpften Elementes auf Basis eines aktuellen Wertes des mit dem Element verknüpften Datenstromes. Beispielsweise kann eine dynamische Anpassung der Höhe der Darstellung des Datenstroms an den aktuellen Wert des Datenstroms erfolgen. Insbesondere kann die tabellenartige Anordnung dynamisch aus den vom Steuergerät bereitgestellten Datenströmen generiert werden.

Wie bereits erwähnt ist bevorzugt vorgesehen, dass das Element, Informationen hinsichtlich der Art der Darstellung des mit dem Element verknüpften Datenstroms umfasst. In diesem Zusammenhang ist in einer bevorzugten Weiterbildung der Erfindung vorgesehen, dass das Element die Höhe und/oder Breite der Darstellung des Datenstroms definiert, mit dem das Element verknüpft ist und/oder das Verfahren zusätzlich die folgenden Schritte umfasst:
- Definieren der Höhe und/oder Breite der Darstellung des mit dem Element verknüpften Datenstroms im Element und
- Darstellen des mit dem Element verknüpften Datenstroms mit dieser Höhe und/oder Breite.

Bevorzugt umfasst das Definieren der Höhe und/oder Breite der Darstellung des mit dem Element verknüpften Datenstroms im Element ein Definieren von Werten in Abhängigkeit des mit dem Element verknüpften Datenstroms bzw. den empfangenen Daten. Alternativ oder zusätzlich kann die Höhe und/oder Breite auch vom Nutzer festgelegt werden. So ist gemäß einer bevorzugten Weiterbildung der Erfindung vorgesehen, dass der Nutzer die Höhe und/oder Breite der Darstellung des mit dem Element verknüpften Datenstroms im Element definieren kann und/oder
das Verfahren zusätzlich die folgenden Schritte umfasst:
- Definieren einer Breite und/oder Höhe der Darstellung des mit dem Element verknüpften Datenstroms im Element durch den Nutzer und
- Darstellen des mit dem Element verknüpften Datenstroms mit dieser Breite und/oder Höhe.

Des Weiteren kann wie bereits erwähnt die Höhe und/oder Breite nicht nur definiert werden sondern auch geändert werden. Bevorzugt umfasst das Verändern der Darstellung des Datenstroms in der tabellenartigen Anordnung durch den Nutzer also das Verändern der Höhe und/oder Breite durch den Nutzer. Weiterhin kann die Höhen- und/oder Breitenänderung dynamisch erfolgen. Bevorzugt umfasst das Verfahren den folgenden Schritt:
- Ändern einer Höhe und/oder Breite der Darstellung des mit dem Element verknüpften Datenstroms oder
- Ändern einer Höhe und/oder Breite der Darstellung des mit dem Element verknüpften Datenstroms auf Basis eines aktuellen Wertes des mit dem Element verknüpften Datenstromes.

Beim Ändern der Höhe der Darstellung des mit dem Element verknüpften Datenstroms ist es grundsätzlich möglich, dass sich nur diese eine Darstellung ändert und weitere Darstellungen von Datenströmen in der tabellenartigen Anordnung von dieser Änderung nicht betroffen sich. Allerdings ist bevorzugt vorgesehen, dass sich bei einer Änderung der Höhe der Darstellung eines Datenstroms in der tabellenartigen Anordnung, die Höhe der Zeile der tabellenartigen Anordnung, in welcher der Datenstrom dargestellt wird, anpasst. Dies erfolgt bevorzugt, indem alle in dieser Zeile vorhandenen Darstellungen von Datenströmen ebenfalls die Höhe ändern. Demnach ist gemäß einer bevorzugten Weiterbildung der Erfindung vorgesehen, dass ein Ändern einer Höhe der Darstellung des mit dem Element verknüpften Datenstroms auf eine zukünftige Höhe folgende Schritte umfasst:
- Ermitteln von weiteren mit Datenströmen verknüpften Elementen in der Zeile der tabellenartigen Anordnung des dargestellten Datenstroms über die Zeilen-Elementliste der ersten Baumstruktur,
- Abfragen von Höhenanforderungen bei den ermittelten weiteren mit Datenströmen verknüpften Elementen,
- Vergleichen der abgefragten Höhenanforderungen der weiteren mit Datenströmen verknüpften Elementen mit der zukünftigen Höhe,
- Zurückgeben einer angepassten zukünftigen Höhe für die Darstellung des mit dem Element verknüpften Datenstroms, auf Basis der Höhenanforderungen,
- Definieren der Höhe der Darstellung des mit dem Element verknüpften Datenstroms im Element auf Basis der zurückgegebenen angepassten zukünftigen Höhe,
- Ändern der Höhe der Darstellung aller in der Zeile dargestellten Datenströme auf die definierte Höhe.

Die erste Baumstruktur ermöglicht somit eine effiziente und ressourcenschonende Änderung der Höhe der Darstellung und der Höhe der entsprechenden Zeile, da über die Zeilen-Elementliste die Elemente identifizierbar sind, die von der Höhenänderung betroffen sind. Bei diesen Elementen werden die Höhenanforderungen für die Darstellungen der mit diesen Elementen verknüpften Datenströme abgefragt. Unter Höhenanforderungen ist in diesem Sinne bevorzugt ein unterer oder oberer Grenzwert für die Höhe der Darstellungen der Datenströme zu verstehen. Wenn keine Kollision zwischen der zukünftigen Höhe und den Höhenanforderung vorliegt, umfasst das Zurückgeben der angepassten zukünftigen Höhe bevorzugt ein Zurückgeben der zukünftigen Höhe für die Darstellung des mit dem Element verknüpften Datenstroms. Wenn beispielsweise keines der weiteren Elemente eine Höhenanforderung vorgibt, entspricht dies dem Freigeben der angefragten zukünftigen Höhe.

Analoges gilt bevorzugt für eine Änderung der Breite. Bevorzugt ist also vorgesehen, dass sich bei der Änderung der Breite der Darstellung eines Datenstroms in der tabellenartigen Anordnung, die Breite der Spalte der tabellenartigen Anordnung, in welcher der Datenstrom dargestellt wird, anpasst. Dies erfolgt bevorzugt, indem alle in dieser Spalte vorhandenen Darstellungen von Datenströmen ebenfalls die Breite ändern. Gemäß einer bevorzugten Weiterbildung umfasst das Ändern der Breite der Darstellung des mit dem Element verknüpften Datenstroms auf eine zukünftige Breite folgende Schritte:
- Ermitteln von weiteren mit Datenströmen verknüpften Elementen in der Spalte der tabellenartigen Anordnung des dargestellten Datenstroms über die Spalten-Elementliste der zweiten Baumstruktur,
- Abfragen von Breitenanforderungen bei den ermittelten weiteren mit Datenströmen verknüpften Elementen,
- Vergleichen der Breitenanforderungen der weiteren mit Datenströmen verknüpften Elementen mit der zukünftigen Breite,
- Zurückgeben einer angepassten zukünftigen Breite für die Darstellung des mit dem Element verknüpften Datenstroms, auf Basis der Breitenanforderungen,
- Definieren der Breite der Darstellung des mit dem Element verknüpften Datenstroms im Element auf Basis der zurückgegebenen angepassten zukünftigen Breite,
- Ändern der Breite der Darstellung aller in der Spalte dargestellten Datenströme auf die definierte Breite.

Das Generieren der ersten und zweiten Baumstruktur ermöglicht also ein ressourcenschonendes Darstellen von Datenströmen in der tabellenartigen Anordnung, wobei aufgrund der ersten und zweiten Baumstruktur die tabellenartige Anordnung der Darstellungen, sowie die Darstellungen der Datenströme selbst sehr flexibel sind. Somit wird die Übersichtlichkeit der Darstellung der Datenströme gewahrt und dem Nutzer weiterhin die Möglichkeit gegeben die Darstellung der Datenströme zwecks Analyse und Auswertung der Datenströme zu verändern. In diesem Zusammenhang ist gemäß einer bevorzugten Weiterbildung der Erfindung vorgesehen, dass das Element mit einer weiteren ersten und zweiten Baumstruktur zum Darstellen von Datenströmen verknüpft ist und/oder das Verfahren zusätzlich die folgenden Schritte umfasst:
- Verknüpfen des Elementes mit einer weiteren ersten Baumstruktur und einer weiteren zweiten Baumstruktur zum Darstellen von Datenströmen, und
- Darstellen der Datenströme auf Basis der weiteren ersten und zweiten Baumstrukturen in einer weiteren tabellenartigen Anordnung innerhalb einer Zelle der tabellenartigen Anordnung.

Bevorzugt ist das Element also nicht nur mit einem Datenstrom verknüpft, sondern auch mit der weiteren ersten und der weiteren zweiten Baumstruktur. Diese weitere erste Baumstruktur ist analog aufgebaut wie die erste Baumstruktur und die weitere zweite Baumstruktur ist analog aufgebaut wie die zweite Baumstruktur. Somit umfassen die weitere erste und die weitere zweite Baumstruktur ihrerseits wieder weitere Elemente die mit Datenströmen verknüpft sind. Somit lässt sich darüber die weitere tabellenartige Anordnung innerhalb der Zelle der tabellenartigen Anordnung erzeugen. Eine solche "Tabelle in der Tabelle" lässt sich auch als drei-dimensionale Tabelle auffassen. Das Erzeugen von der weiteren tabellenartigen Anordnung innerhalb der Zelle der tabellenartigen Anordnung erhöht nicht nur die Flexibilität. Insbesondere in Kombination mit der Darstellung von Datenströmen bei denen einige Darstellungen von Datenströmen ausgeblendet und/oder eingeklappt sind, bietet die drei-dimensionale Tabelle Vorteile. Bevorzugt ist vorgesehen, dass bei ausgeblendeten und/oder eingeklappten Darstellungen, Inhalte einer darunterliegenden tabellenartigen Anordnung sichtbar werden. Bei der weiteren tabellenartigen Anordnung innerhalb der Zelle der tabellenartigen Anordnung ist mit darunterliegend somit bevorzugt die Zelle der tabellenartigen Anordnung zu verstehen.

In einer weiteren bevorzugten Weiterbildung der Erfindung ist vorgesehen, dass das Verfahren zusätzlich die folgenden Schritte umfasst:
- fortlaufendes Übertragen der Daten vom Steuergerät für mit einem Element verknüpfte Datenströme,
- Aktualisieren der Darstellung der Datenströme in dem Anzeigebereich in der tabellenartigen Anordnung, auf Basis der übertragenen Daten.

Fortlaufendes Übertragen der Daten heißt bevorzugt, dass immer wieder neue Daten vom Steuergerät übertragen werden, z.B. aktuelle Messdaten. Dieses Übertragen kann z.B. kontinuierlich erfolgen, in einem vorbestimmten Takt oder ereignisorientiert. Die Darstellungen der Datenströme werden laufend aktualisiert, auf Basis der übertragenen Daten. Beispielsweise wird auf dynamische Weise die Höhe der Darstellung an den aktuellen Messwert angepasst oder wenn ein Messwert über eine längere Zeit sich nicht mehr verändert, kann die Darstellung dieses Datenstroms ausgeblendet werden. Das Ausblenden führt wiederum bevorzugt zum Lösen der Verknüpfung des Elementes mit dem der Datenstrom verknüpft ist, so dass die Datenübertragung für diesen Datenstrom unterbrochen wird.

Das Verfahren kann für ganz verschiedene Anwendungen verwendet werden. Gemäß einer bevorzugten Weiterbildung der Erfindung wird das Verfahren zum Testen der Steuerungssoftware eines Fahrzeugsteuergerätes bei Hardware-in-the-Loop Anwendungen verwendet. Weiter bevorzugt wird der Anzeigebereich zum Darstellen der Datenströme von Messdateninstrumenten für Echtzeit-Messdaten bei Hardware-in-the-Loop Anwendungen verwendet.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch eine tabellenartige Anordnung auf einem Anzeigebereich zum Darstellen von Datenströmen, gemäß einem bevorzugten Ausführungsbeispiel der Erfindung,
- Fig. 2: schematisch die tabellenartige Anordnung auf dem Anzeigebereich zum Darstellen von Datenströmen, gemäß einem weiteren bevorzugten Ausführungsbeispiel der Erfindung,
- Fig. 3: schematisch die tabellenartige Anordnung auf dem Anzeigebereich zum Darstellen von Datenströmen, gemäß einem weiteren bevorzugten Ausführungsbeispiel der Erfindung,
- Fig. 4: schematisch die tabellenartige Anordnung auf dem Anzeigebereich zum Darstellen von Datenströmen, gemäß einem weiteren bevorzugten Ausführungsbeispiel der Erfindung, und
- Fig. 5: schematisch ein Ablaufdiagramm zum Ändern einer Höhe der Darstellung des Datenstroms in der tabellenartigen Anordnung, gemäß einem weiteren bevorzugten Ausführungsbeispiel der Erfindung.

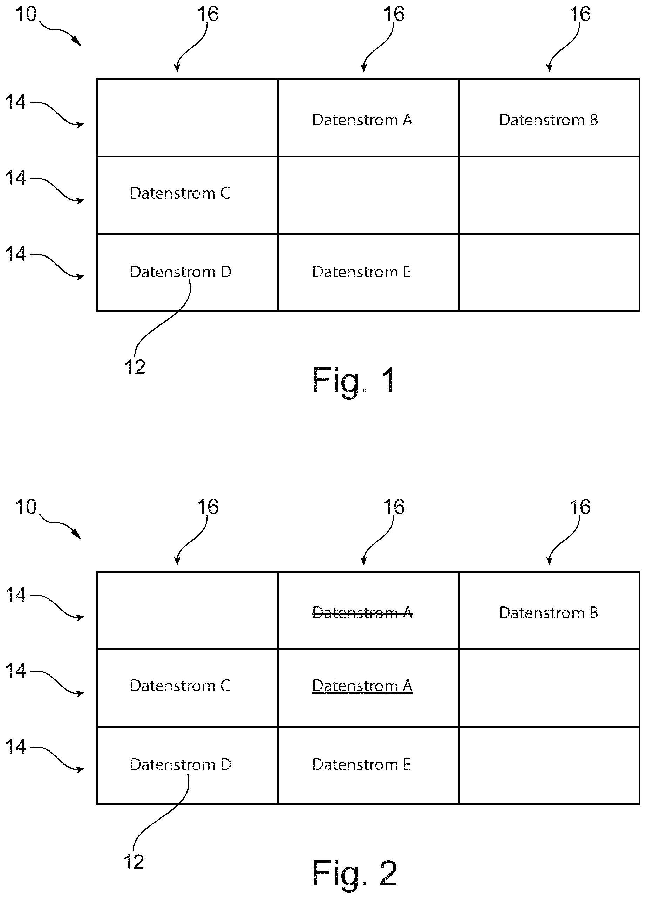

Figur 1 zeigt schematisch eine tabellenartige Anordnung 10 auf einem Anzeigebereich zum Darstellen von Datenströmen 12, gemäß einem bevorzugten Ausführungsbeispiel der Erfindung. Die tabellenartige Anordnung 10 weist eine Mehrzahl an Zeilen 14 und eine Mehrzahl an Spalten 16 auf. Im vorliegenden Ausführungsbeispiel sind es drei Zeilen 14 und drei Spalten 16. Insgesamt werden in der tabellenartigen Anordnung 10 fünf Datenströme 12, nämlich Datenstrom A bis E dargestellt. Zum Darstellen der Datenströme 12 in der tabellenartigen Anordnung 10 ist vorgesehen, dass eine erste Baumstruktur und eine zweite Baumstruktur generiert werden.

Die erste Baumstruktur umfasst eine erste mehrdimensionale Liste, die wiederum eine Mehrzahl an Zeilen-Elementlisten umfasst. Die Zeilen-Elementliste umfasst ihrerseits eine Mehrzahl von Elementen 20. Die Elemente 20 sind jeweils mit einem Datenstrom 12 verknüpft. Um für den Leser die Verknüpfbarkeit des Elementes 20 zu einem spezifischen Datenstrom 12 aus Figur 1 kenntlich zu machen, werden die Elemente 20 im Folgenden als Elemente A bis E, analog zu den Datenströmen A bis E bezeichnet. Insbesondere ist vorgesehen, dass das Element 20 definiert, in welcher Spalte 16 der Datenstrom 12 in der tabellenartigen Anordnung 10 dargestellt wird, mit dem das Element 20 verknüpft ist. Das Definieren der Spalte 16 im Element 20 wird im Folgenden durch eine tiefgestellte, fett-formatiert sowie unterstrichene Zahl nach dem Namen des Elementes 20 gekennzeichnet.

Für die in Figur 1 gezeigte tabellenartige Anordnung 10 wird folgende erste Baumstruktur generiert:
Erste mehrdimensionale Liste:
<Zeilen-Elementliste< Element-A_{1,**2**,} Element-B_{1,**3**} >>)
<Zeilen-Elementliste< Element-C_{2,**1**} >>)
<Zeilen-Elementliste< Element-D_{3,**1**}, Element-E_{3,**2**} >>)

Bei der ersten Baumstruktur stimmt die Länge der Zeilen-Elementliste also nicht mit der Anzahl Spalten 16 der tabellenartigen Anordnung 10 überein. In Figur 1 sind nämlich drei Spalten 16 gezeigt, allerdings ist die Länge der Zeilen-Elementliste entweder ein Element lang oder zwei Elemente lang.

Wie bereits erwähnt ist zum Darstellen der Datenströme 12 in der tabellenartigen Anordnung 10 auch das Generieren der zweiten Baumstruktur generiert vorgesehen. Die zweite Baumstruktur umfasst eine zweite mehrdimensionale Liste, die wiederum eine Mehrzahl an Spalten-Elementlisten umfasst. Die Spalten-Elementlisten umfassen ihrerseits die Mehrzahl an Elementen 20. Insbesondere ist vorgesehen, dass das Element 20 definiert, in welcher Zeile 14 der Datenstrom 12 in der tabellenartigen Anordnung 10 dargestellt wird, mit dem das Element 20 verknüpft ist. Das definieren der Zeile 14 im Element 20 wird im Folgenden durch eine tiefgestellte, fett-formatiert sowie unterstrichene Zahl nach dem Elementnamen gekennzeichnet.

Für die in Figur 1 gezeigte tabellenartige Anordnung 10 wird folgende zweite Baumstruktur generiert:
Zweite mehrdimensionale Liste:
<Spalten-Elementliste< Element-C_{**2**,1}, Element-D**₃**,₁ >>)
<Spalten-Elementliste< Element-A_{**1**,2}, Element-E_{**3**,2} >>)
<Spalten-Elementliste< Element-B_{**1**,3} >>)

Bei der zweiten Baumstruktur stimmt die Länge der Spalten-Elementliste also nicht mit der Anzahl Zeilen 14 der tabellenartigen Anordnung 10 überein. In Figur 1 sind nämlich drei Zeilen 14 gezeigt, allerdings ist die Länge der Spalten-Elementliste entweder ein Element lang oder zwei Elemente lang.

Figur 2 zeigt ebenfalls schematisch eine tabellenartige Anordnung 10 auf einem Anzeigebereich zum Darstellen der Datenströmen 12, wobei in Figur 2, verglichen mit Figur 1 die Darstellung des Datenstroms A vom Nutzer innerhalb der tabellenartigen Anordnung 10 verschoben wurde. In Figur 1 befindet sich die Darstellung des Datenstroms A in der ersten Zeile 14 und in der zweiten Spalte 16. In Figur 2 befindet sich die Darstellung des Datenstroms A in der zweiten Zeile 14 und in der zweiten Spalte 16. Das Verschieben der Darstellung des Datenstroms A ist in Figur 2 durch einen durchgestrichenen und einen unterstrichenen Datenstrom A verdeutlicht.

Das Verändern der tabellenartigen Anordnung 10 der Datenströme 12 durch den Nutzer führt in diesem Beispiel zu einer Änderung in der ersten Baumstruktur. Die zweite Baumstruktur bleibt in diesem Beispiel hingegen gleich wie für Figur 1, da die Darstellung des Datenstroms A sich immer noch in der zweiten Spalte 16 befindet:
Erste mehrdimensionale Liste:
   <Zeilen-Elementliste< Element-B >>)
   <Zeilen-Elementliste< Element-C, Element-A >>)
   <Zeilen-Elementliste< Element-D, Element-E >>)
Zweite mehrdimensionale Liste:
   <Spalten-Elementliste< Element-C, Element-D >>)
   <Spalten-Elementliste< Element-A, Element-E >>)
   <Spalten-Elementliste< Element-B >>)

Die Reihenfolge der Elemente 20 in der Zeilen-Elementliste ist nicht ausschlaggebend für die Reihenfolge der Darstellung der Datenströme 12 in der entsprechenden Spalte 16 der tabellenartigen Anordnung 10. Genauso ist die Reihenfolge der Elemente in der Spalten-Elementliste nicht ausschlaggebend für die Reihenfolge der Darstellung der Datenströme 12 in der entsprechenden Zeile 14 der tabellenartigen Anordnung 10.

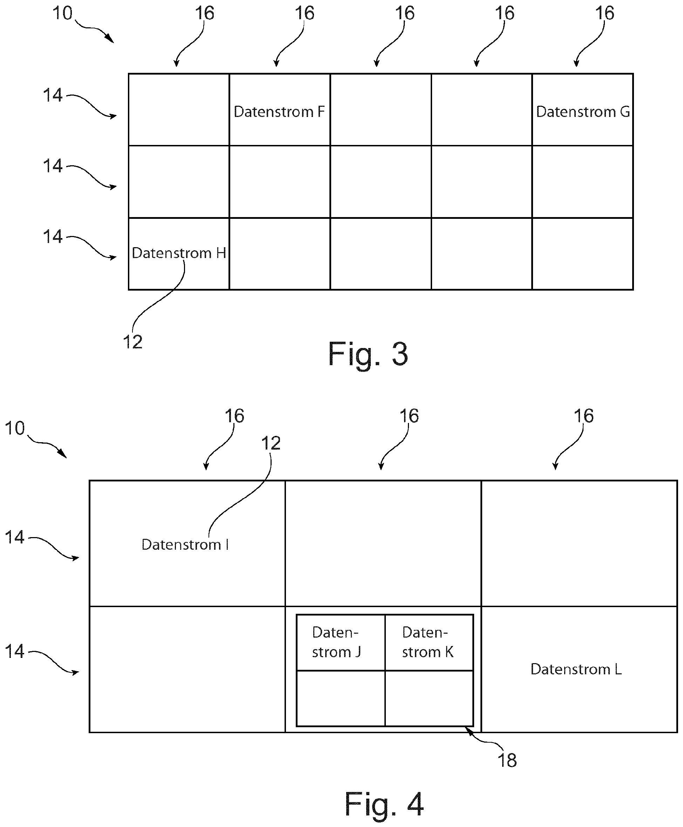

In Figur 3 ist ebenfalls schematisch eine tabellenartige Anordnung 10 auf einem Anzeigebereich zum Darstellen der Datenströmen 12 gezeigt, wobei hierbei die Datenströme F bis G dargestellt sind. Die tabellenartige Anordnung 10 in Figur 3 weist drei Zeilen 14 auf, wobei in der zweiten Zeile 14 kein Datenstrom 12 dargestellt wird. Weiterhin weist die tabellenartige Anordnung 10 in Figur 3 fünf Spalten 16 auf, wobei in der dritten und vierten Spalte 16 kein Datenstrom 12 dargestellt wird.

Die erste und zweite Baumstruktur für die tabellenartige Anordnung in Figur 3 entspricht Folgender:
Erste mehrdimensionale Liste:
   <Zeilen-Elementliste< Element-F_{1,**2**}, Element-G_{1,**5**} >>)
   <Zeilen-Elementliste< Element-H_{3,**1**} >>)
Zweite mehrdimensionale Liste:
   <Spalten-Elementliste< Element-H_{**3**,1} >>)
   <Spalten-Elementliste< Element-F_{**1**,2} >>)
   <Spalten-Elementliste< Element-G_{**1,**5} >>)

Die erste und zweite Baumstruktur muss also nicht die Dimension der tabellenartigen Anordnung 10 wiederspiegeln. In Figur 3 weist die tabellenartige Anordnung 10 eine Dimension von drei x fünf, sprich 15 auf. Die erste und zweite Baumstruktur legt für die leere Zeile 14 und die leere Spalte 16 keine eigene Liste an, so dass Speicherplatz gespart wird. Des Weiteren kann so die tabellenartige Anordnung 10 flexibel erweitert werden, ohne dass die erste und/oder zweite Baumstruktur sich stark vergrößern. Beispielsweise kann eine zusätzliche Darstellung eines Datenstroms 12 in der 100sten Zeile 14 hinzugefügt werden kann (in Figur 3 nicht dargestellt), so dass dann die tabellenartige Anordnung 10 fünfhundert Zellen hätte. Die erste und/oder zweite Baumstruktur muss dafür aber nicht um 485 Elemente erweitert werden, sondern nur um eines.

In Figur 4 ist eine weitere schematische tabellenartige Anordnung 10 mit den Datenströmen I bis L. In diesem Fall weist die tabellenartige Anordnung 10 eine Tabelle in der Tabelle auf, also eine verschachtelte Struktur. Es gibt eine erste tabellenartige Anordnung 10, die zwei Zeilen 14 und drei Spalten 16 aufweist. In der Zelle in der zweiten Zeile 14 und der zweiten Spalte 16 ist eine weitere tabellenartige Anordnung 18 mit zwei Zeilen und zwei Spalten gezeigt. Eine solche verschachtelte Anordnung lässt sich über die Baumstrukturen sehr leicht generieren und verwalten. Sie wird erzeugt indem, das Element 20 nicht mit einem Datenstrom verknüpft wird, sondern mit einer weiteren ersten Baumstruktur und einer weiteren zweiten Baumstruktur. Im Folgenden wird diese Verknüpfung des Elementes 20 mit einer Baumstruktur durch "VB" (Verknüpfung Baumstruktur) wiedergegeben. Für tabellenartige Anordnung in Figur 4 wird folgende erste und zweite Baumstruktur generiert:
Erste mehrdimensionale Liste:
   <Zeilen-Elementliste< Element-I_{1,**1**} >>)
   <Zeilen-Elementliste< Element-VB_{2,**2**}, Element-L_{2,**3**} >>)
Zweite mehrdimensionale Liste:
   <Spalten-Elementliste< Element-I_{**1**,1} >>)
   <Spalten-Elementliste< Element-VB_{**2,**2} >>)
   <Spalten-Elementliste< Element-L_{**2**,3} >>)

In der Zeile-Elementliste und Spalten-Elementliste findet sich das mit der weiteren ersten Baumstruktur und der weiteren zweiten Baumstruktur verknüpfte Element "Element-VB". Die weitere erste Baumstruktur sowie die weitere zweite Baumstruktur, mit der das Element-VB verknüpft ist, sieht für die weitere tabellenartige Anordnung 18 in Figur 4 wie folgt aus:
Weitere erste Baumstruktur mit weiterer erster mehrdimensionaler Liste:
   <Zeilen-Elementliste< Element-J_{1,**1**}, Element-K_{1,**2**} >>)
Weitere zweite Baumstruktur mit weiterer zweiter mehrdimensionaler Liste:
   <Spalten-Elementliste< Element-J_{**1**,1} >>)
   <Spalten-Elementliste< Element-K_{**1**,2} >>)

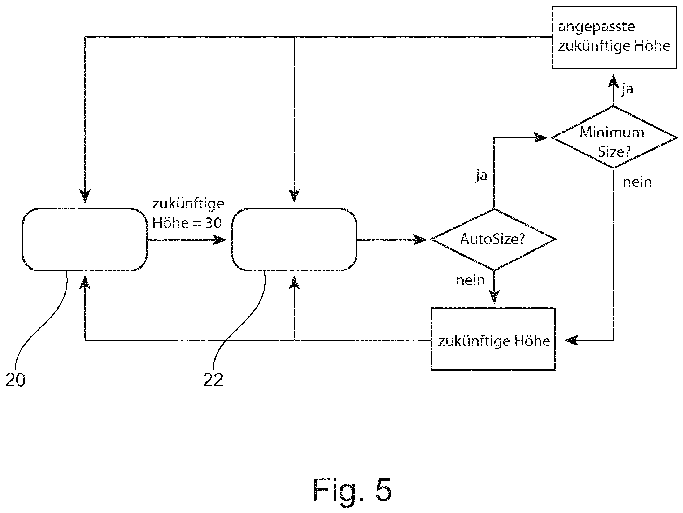

In Figur 5 ist ein beispielhaftes schematisches Ablaufdiagramm zum Ändern einer Höhe der Darstellung des Datenstroms 12 in der tabellenartigen Anordnung 10, gemäß einem weiteren bevorzugten Ausführungsbeispiel der Erfindung, gezeigt. Wenn eine Darstellung eines Datenstroms 12 die Höhe verändern soll fragt das Element 20, das mit diesem Datenstrom 12 verknüpft ist, bei seinem Parent 22 nach, ob es die Höhe der Darstellung des Datenstroms 12 ändern kann. Der Parent 22 bezeichnet im vorliegenden Fall das Datenobjekt, das die tabellenartige Anordnung 10 erzeugt. Der Parent 22 ist also auch dasjenige Datenobjekt, das die erste und zweite Baumstruktur generiert und gegebenenfalls aktualisiert. Im vorliegenden Beispiel fragt das Element 20 beim Parent 22 an, ob die Höhe der Darstellung des mit dem Element 20 verknüpften Datenstroms 12 auf eine zukünftige Höhe von 30 geändert werden kann. Der Parent 22 kann ressourcenschonend über die erste Baumstruktur direkt Eigenschaften und Bedingungen für die weiteren Elemente 20 der entsprechenden Zeile 12 abfragen. Das Ändern der Höhe der Darstellung eines Datenstroms 12 auf die zukünftige Höhe umfasst also einen ersten Schritt, bei dem über die Zeilen-Elementliste der ersten Baumstruktur ermittelt wird, welche weiteren mit Datenströmen 12 verknüpften Elemente 20 in der Zeile 14 der tabellenartigen Anordnung 10 des dargestellten Datenstroms 10 dargestellt werden. In einem weiteren Schritt werden Höhenanforderungen bei diesen ermittelten weiteren mit Datenströmen 12 verknüpften Elementen 20 abgefragt. Jedes Element 20 umfasst jeweils Informationen hinsichtlich der Art der Darstellung des verknüpften Datenstroms 12, die auch die Höhe der Darstellung betreffen. Im vorliegenden Beispiel werden die Informationen "AutoSize" sowie "MinimumSize" als Höhenanforderungen abgefragt. Die Information MinimumSize gibt die Mindestgröße der Darstellung des Datenstroms 12 an, während die Information AutoSize in einem Wahr/Falsch-Wert die Ausblendbarkeit des Datenstroms 12 angibt. Wenn kein weiteres Element 20 fordert, dass der mit dem Element 20 verknüpfte Datenstrom 12 nicht ausgeblendet werden kann, wird die zukünftige Höhe direkt freigegeben. Alternativ wird die zünftige Höhe mit der abgefragten Mindestgröße verglichen und gegebenenfalls eine angepasste zukünftige Höhe zurückgegeben. Das Verfahren umfasst also den Schritt Zurückgeben der angepassten zukünftigen Höhe für die Darstellung des mit dem Element verknüpften Datenstroms, auf Basis der Höhenanforderungen. Letztlich wird nur ein Element 20 tatsächlich angepasst und die weiteren Elemente 20 gehen den Vorschlag mit, ohne weiteren Datenverkehr erforderlich zu machen. Dazu berechnet der Parent 22 entsprechende Differenzen und gibt die Information weiter. So wird die Zeile 14 unter der betroffenen Zeile 14, die verkleinert werden soll, um die Differenz zwischen früherer Höhe der oberen Zeile 14 und zukünftiger Höhe der oberen Zeile 14 verschoben, ohne weitere Anfragen an einzelne Elemente 20, um möglichst wenig Kommunikation notwendig zu machen.

### Bezugszeichenliste

- 10: tabellenartige Anordnung
- 12: Datenstrom
- 14: Zeile
- 16: Spalte
- 18: weitere tabellenartige Anordnung
- 20: Element
- 22: Parent

## Patentansprüche

1. Verfahren zum Testen einer Steuerungssoftware eines Steuergeräts, wobei das Steuergerät Datenströme (12) zur Auswertung bereitstellt, mit den Schritten:
- Generieren einer ersten und zweiten Baumstruktur zum Darstellen der Datenströme (12) in einem Anzeigebereich in einer tabellenartigen Anordnung (10), aufweisend eine Mehrzahl von Zeilen (14) und eine Mehrzahl von Spalten (16), wobei
-- die erste Baumstruktur eine erste mehrdimensionale Liste umfasst,
-- die erste mehrdimensionale Liste eine Mehrzahl an Zeilen-Elementlisten umfasst,
-- die Zeilen-Elementlisten eine Mehrzahl von Elementen (20) umfassen,
-- jedes Element (20) in der Zeilen-Elementliste mit einem Datenstrom (12) verknüpft ist,
-- das Element (20) definiert, in welcher Spalte (16) der Datenstrom (12) dargestellt wird, mit dem das Element (20) verknüpft ist, wobei
-- die zweite Baumstruktur eine zweite mehrdimensionale Liste umfasst,
-- die zweite mehrdimensionale Liste eine Mehrzahl an Spalten-Elementlisten umfasst,
-- die Spalten-Elementlisten die Mehrzahl von Elementen (20) umfassen,
-- das Element (20) definiert, in welcher Zeile (14) der Datenstrom (12) dargestellt wird, mit dem das Element (20) verknüpft ist, und
- Darstellen der Datenströme (12) auf Basis der ersten und zweiten Baumstruktur.

2. Verfahren nach Anspruch 1, wobei das Element (20) über einen Verknüpfungszustand mit dem Datenstrom (12) definiert, ob Daten dieses Datenstromes (12) vom Steuergerät übertragen werden und/oder
das Verfahren die zusätzlich folgenden Schritte umfasst:
- Verknüpfen des Elementes (20) mit dem Datenstrom (12), und
- Übertragen der Daten vom Steuergerät für diesen Datenstrom (12).

3. Verfahren nach Anspruch 1 oder 2, wobei ein Ausblenden eines dargestellten Datenstroms (12) zum Lösen der Verknüpfung des mit dem Element (20) verknüpften Datenstroms (12) im Element (20) führt, und/oder
das Verfahren zusätzlich die folgenden Schritte umfasst:
- Lösen der Verknüpfung des mit dem Element (20) verknüpften Datenstroms (12) im Element (20), und
- Unterbrechen der Datenübertragung vom Steuergerät für diesen Datenstrom (12).

4. Verfahren nach einem der vorhergehenden Ansprüche, wobei
ein Verändern der tabellenartigen Anordnung (10) der Datenströme (12) durch einen Nutzer zu einer Änderung in der ersten und/oder zweiten Baumstruktur führt,
ein Verändern der Darstellung eines Datenstroms (12) in der tabellenartigen Anordnung (10) durch einen Nutzer zu einer Veränderung in dem mit dem Datenstrom (12) verknüpften Element (20) führt,
eine Änderung in der ersten und/oder zweiten Baumstruktur zu einer Veränderung in der tabellenartigen Anordnung (10) der Datenströme (12) führt, und/oder
eine Änderung in dem mit dem Datenstrom (12) verknüpften Element (20) zu einer Veränderung der Darstellung des mit dem Element (20) verknüpften Datenstroms (12) in der tabellenartigen Anordnung (10) führt.

5. Verfahren nach einem der vorhergehenden Ansprüche, wobei das Element (20) eine Höhe und/oder Breite der Darstellung des Datenstroms (12) definiert, mit dem das Element (20) verknüpft ist und/oder
das Verfahren zusätzlich die folgenden Schritte umfasst:
- Definieren einer Höhe und/oder Breite der Darstellung des mit dem Element (20) verknüpften Datenstroms (12) im Element (20) und
- Darstellen des mit dem Element (20) verknüpften Datenstroms (12) mit dieser Höhe und/oder Breite.

6. Verfahren nach einem der vorhergehenden Ansprüche, wobei das Verfahren zusätzlich den folgenden Schritt umfasst:
- Ändern einer Höhe und/oder Breite der Darstellung des mit dem Element (20) verknüpften Datenstroms (12).

7. Verfahren nach einem der vorhergehenden Ansprüche, wobei ein Ändern einer Höhe der Darstellung des mit dem Element (20) verknüpften Datenstroms (12) auf eine zukünftige Höhe folgende Schritte umfasst:
- Ermitteln von weiteren mit Datenströmen (12) verknüpften Elementen (20) in der Zeile (14) der tabellenartigen Anordnung (10) des dargestellten Datenstroms (12) über die Zeilen-Elementliste der ersten Baumstruktur,
- Abfragen von Höhenanforderungen bei den ermittelten weiteren mit Datenströmen (12) verknüpften Elementen (20),
- Vergleichen der abgefragten Höhenanforderungen der weiteren mit Datenströmen (12) verknüpften Elementen (20) mit der zukünftigen Höhe,
- Zurückgeben einer angepassten zukünftigen Höhe für die Darstellung des mit dem Element (20) verknüpften Datenstroms (12), auf Basis der Höhenanforderungen,
- Definieren der Höhe der Darstellung des mit dem Element (20) verknüpften Datenstroms (12) im Element (20) auf Basis der zurückgegebenen angepassten zukünftigen Höhe,
- Ändern der Höhe der Darstellung aller in der Zeile dargestellten Datenströme auf die definierte Höhe.

8. Verfahren nach einem der vorhergehenden Ansprüche, wobei ein Ändern einer Breite der Darstellung des mit dem Element (20) verknüpften Datenstroms (12) auf eine zukünftige Breite folgende Schritte umfasst:
- Ermitteln von weiteren mit Datenströmen (12) verknüpften Elementen (20) in der Spalte (16) der tabellenartigen Anordnung (10) des dargestellten Datenstroms (12) über die Spalten-Elementliste der zweiten Baumstruktur,
- Abfragen von Breitenanforderungen bei den ermittelten weiteren mit Datenströmen (12) verknüpften Elementen (20),
- Vergleichen der Breitenanforderungen der weiteren mit Datenströmen (12) verknüpften Elementen (20) mit der zukünftigen Breite,
- Zurückgeben einer angepassten zukünftigen Breite für die Darstellung des mit dem Element (20) verknüpften Datenstroms (12), auf Basis der Breitenanforderungen,
- Definieren der Breite der Darstellung des mit dem Element (20) verknüpften Datenstroms (12) im Element auf Basis der zurückgegebenen angepassten zukünftigen Breite,
- Ändern der Breite der Darstellung aller in der Spalte (16) dargestellten Datenströme (12) auf die definierte Breite.

9. Verfahren nach einem der vorhergehenden Ansprüche, wobei das Element (20) mit einer weiteren ersten und zweiten Baumstruktur zum Darstellen von Datenströmen (12) verknüpft ist und/oder
das Verfahren zusätzlich die folgenden Schritte umfasst:
- Verknüpfen des Elementes (20) mit einer weiteren ersten Baumstruktur und einer weiteren zweiten Baumstruktur zum Darstellen von Datenströmen (12), und
- Darstellen der Datenströme (12) auf Basis der weiteren ersten und zweiten Baumstrukturen in einer weiteren tabellenartigen Anordnung (18) innerhalb einer Zelle der tabellenartigen Anordnung (10).

10. Verfahren nach einem der vorherigen Ansprüche, wobei das Verfahren zusätzlich die folgenden Schritte umfasst:
- fortlaufendes Übertragen der Daten vom Steuergerät für mit einem Element (20) verknüpfte Datenströme (12),
- Aktualisieren der Darstellung der Datenströme (12) in dem Anzeigebereich in der tabellenartigen Anordnung (10), auf Basis der übertragenen Daten.

11. Verfahren nach einem der vorherigen Ansprüche, wobei der Anzeigebereich zum Darstellen der Datenströme (12) von Messdateninstrumenten für Echtzeit-Messdaten bei Hardware-in-the-Loop Anwendungen verwendet wird.

## Claims

1. A method for testing a control software of a control device, wherein the control device provides data streams (12) for evaluation, having the steps of:
- generating a first and a second tree structure for representing the data streams (12) in a display region in a tabular arrangement (10), comprising a plurality of rows (14) and a plurality of columns (16), wherein
-- the first tree structure comprises a first multi-dimensional list,
-- the first multidimensional list comprises a plurality of row element lists,
-- the row element lists comprise a plurality of elements (20),
-- each element (20) in the row element list is linked to a data stream (12),
-- the element (20) defines in which column (16) the data stream (12) to which the element (20) is linked is represented, wherein
-- the second tree structure comprises a second multi-dimensional list,
-- the second multi-dimensional list comprises a plurality of column element lists,
-- the column element lists comprise the plurality of elements (20),
-- the element (20) defines in which row (14) the data stream (12) to which the element (20) is linked is represented,
- representing the data streams (12) on the basis of the first and second tree structures.

2. The method according to claim 1, wherein the element (20) defines, by means of a linked state to the data stream (12), whether data of said data stream (12) are transferred from the control device, and/or
the method comprises the following additional steps:
- linking the element (20) to the data stream (12), and
- transferring the data from the control device for said data stream (12).

3. The method according to claim 1 or 2, wherein hiding a represented data stream (12) leads to breaking the link of the data stream (12) linked to the element (20) in the element (20), and/or
the method comprises the following additional steps:
- breaking the link of the data stream (12) linked to the element (20) in the element (20), and
- interrupting the data transfer from the control device for said data stream (12).

4. The method according to any one of the preceding claims, wherein
modifying the tabular arrangement (10) of the data streams (12) by a user causes a change in the first and/or second tree structure,
modifying the representation of a data stream (12) in the tabular arrangement (10) by a user causes a change in the element (20) linked to the data stream (12),
modifying the first and/or second tree structure causes a change in the tabular arrangement (10) of the data streams (12), and/or
modifying the element (20) linked to the data stream (12) causes a change in the representation in the tabular arrangement (10) of the data stream (12) linked to the element (20).

5. The method according to any one of the preceding claims,
wherein the element (20) defines a height and/or width of the representation of the data stream (12) to which the element (20) is linked, and/or
the method comprises the following additional steps:
- defining a height and/or width of the representation of the data stream (12) to which the element (20) is linked in the element (20), and
- representing the data stream (12) linked to the element (20) by means of said height and/or width.

6. The method according to any one of the preceding claims, wherein the method comprises the following additional step:
- modifying a height and/or width of the representation of the data stream (12) linked to the element (20).

7. The method according to any one of the preceding claims, wherein modifying a height of the representation of the data stream (12) linked to the element (20) to a future height comprises the following steps:
- determining further elements (20) linked to data streams (12) in the row (14) of the tabular arrangement (10) of the represented data stream (12) by means of the row element list of the first tree structure,
- querying height requirements for the determined further elements (20) linked to data streams (12),
- comparing to the future height the queried height requirements of the further elements (20) linked to data streams (12),
- returning an adjusted future height for representing the data stream (12) linked to the element (20) on the basis of the height requirements,
- defining the height of the representation of the data stream (12) linked to the element (20) in the element (20) on the basis of the returned, adjusted future height,
- modifying the height of the representation of all data streams represented in the row to the defined height.

8. The method according to any one of the preceding claims, wherein modifying a width of the representation of the data stream (12) linked to the element (20) to a future width comprises the following steps:
- determining further elements (20) linked to data streams (12) in the column (16) of the tabular arrangement (10) of the represented data stream (12) by means of the column element list of the second tree structure,
- querying width requirements for the determined further elements (20) linked to data streams (12),
- comparing to the future width the width requirements of the further elements (20) linked to data streams (12),
- returning an adapted future width for representing the data stream (12) linked to the element (20) on the basis of the width requirements,
- defining the width of the representation of the data stream (12) linked to the element (20) in the element on the basis of the returned, adjusted future width,
- modifying the width of the representation of all data streams (12) represented in the column (16) to the defined width.

9. The method according to any one of the preceding claims, wherein the element (20) is linked to a further first and second tree structure for representing data streams (12), and/or
the method comprises the following additional steps:
- linking the element (20) to a further first tree structure and a further second tree structure for representing data streams (12), and
- representing the data streams (12) on the basis of the further first and second tree structures in a further tabular arrangement (18) within a cell of the tabular arrangement (10).

10. The method according to any one of the preceding claims, wherein the method comprises the following additional steps:
- continuously transferring the data from the control device for data streams (12) linked to an element (20),
- updating the representation of the data streams (12) in the display region in the tabular arrangement (10) on the basis of the transferred data.

11. The method according to any one of the preceding claims, wherein the display region is used for representing the data streams (12) of measurement data instruments for real-time measurement data for hardware-in-the-loop applications.

## Revendications

1. Procédé pour tester un logiciel de commande d'un appareil de commande, l'appareil de commande mettant à disposition des flux de données (12) pour l'évaluation, comprenant les étapes suivantes:
- génération d'une première et d'une deuxième structure arborescente pour représenter les flux de données (12) dans une zone d'affichage dans un agencement de type tableau (10) comprenant une pluralité de lignes (14) et une pluralité de colonnes (16),
-- la première structure arborescente comprenant une première liste multidimensionnelle,
-- la première liste multidimensionnelle comprenant une pluralité de listes d'éléments de ligne,
-- les listes d'éléments de ligne comprenant une pluralité d'éléments (20),
-- chaque élément (20) dans la liste d'éléments de ligne étant associé à un flux de données (12),
-- l'élément (20) définissant dans quelle colonne (16) est représenté le flux de données (12) auquel est associé l'élément (20),
-- la deuxième structure arborescente comprenant une deuxième liste multidimensionnelle,
-- la deuxième liste multidimensionnelle comprenant une pluralité de listes d'éléments de colonne,
-- les listes d'éléments de colonne comprenant la pluralité d'éléments (20),
-- l'élément (20) définissant dans quelle ligne (14) est représenté le flux de données (12) auquel est associé l'élément (20), et
- représentation des flux de données (12) sur la base de la première et de la deuxième structure arborescente.

2. Procédé selon la revendication 1, l'élément (20) définissant, par l'intermédiaire d'un état d'association avec le flux de données (12), si des données de ce flux de données (12) sont transmises par l'appareil de commande, et/ou le procédé comprenant en outre les étapes suivantes:
- association de l'élément (20) au flux de données (12), et
- transmission des données par l'appareil de commande pour ce flux de données (12).

3. Procédé selon la revendication 1 ou 2, un masquage d'un flux de données (12) représenté entraînant la suppression de l'association du flux de données (12) associé à l'élément (20) dans l'élément (20), et/ou
le procédé comprenant en outre les étapes suivantes:
- suppression de l'association du flux de données (12) associé à l'élément (20) dans l'élément (20), et
- interruption de la transmission de données par l'appareil de commande pour ce flux de données (12).

4. Procédé selon l'une des revendications précédentes,
une modification, par un utilisateur, de l'agencement de type tableau (10) des flux de données (12) entraînant une modification dans la première et/ou la deuxième structure arborescente,
une modification, par un utilisateur, de la représentation d'un flux de données (12) dans l'agencement de type tableau (10) entraînant une modification dans l'élément (20) associé au flux de données (12),
une modification dans la première et/ou la deuxième structure arborescente entraînant une modification dans l'agencement de type tableau (10) des flux de données (12), et/ou
une modification dans l'élément (20) associé au flux de données (12) entraînant une modification de la représentation du flux de données (12) associé à l'élément (20) dans l'agencement de type tableau (10).

5. Procédé selon l'une des revendications précédentes, l'élément (20) définissant une hauteur et/ou une largeur de la représentation du flux de données (12) auquel est associé l'élément (20) et/ou
le procédé comprenant en outre les étapes suivantes:
- définition d'une hauteur et/ou d'une largeur de la représentation du flux de données (12) associé à l'élément (20) dans l'élément (20), et
- représentation du flux de données (12) associé à l'élément (20) avec cette hauteur et/ou cette largeur.

6. Procédé selon l'une des revendications précédentes, le procédé comprenant en outre l'étape suivante:
- modification d'une hauteur et/ou d'une largeur de la représentation du flux de données (12) associé à l'élément (20).

7. Procédé selon l'une des revendications précédentes, une modification d'une hauteur de la représentation du flux de données (12) associé à l'élément (20) à une hauteur future comprenant les étapes suivantes:
- détermination d'autres éléments (20) associés à des flux de données (12) dans la ligne (14) de l'agencement de type tableau (10) du flux de données (12) représenté, par l'intermédiaire de la liste d'éléments de ligne de la première structure arborescente,
- interrogation d'exigences de hauteur pour les autres éléments (20) déterminés associés à des flux de données (12),
- comparaison des exigences de hauteur interrogées des autres éléments (20) associés à des flux de données (12) avec la hauteur future,
- renvoi d'une hauteur future ajustée pour la représentation du flux de données (12) associé à l'élément (20), sur la base des exigences de hauteur,
- définition de la hauteur de la représentation du flux de données (12) associé à l'élément (20) dans l'élément (20) sur la base de la hauteur future ajustée renvoyée,
- modification, à la hauteur définie, de la hauteur de la représentation de tous les flux de données représentés dans la ligne.

8. Procédé selon l'une des revendications précédentes, une modification d'une largeur de la représentation du flux de données (12) associé à l'élément (20) à une largeur future comprenant les étapes suivantes:
- détermination d'autres éléments (20) associés à des flux de données (12) dans la colonne (16) de l'agencement de type tableau (10) du flux de données (12) représenté, par l'intermédiaire de la liste d'éléments de colonne de la deuxième structure arborescente,
- interrogation d'exigences de largeur pour les autres éléments (20) déterminés, associés à des flux de données (12),
- comparaison des exigences de largeur des autres éléments (20) associés à des flux de données (12) avec la largeur future,
- renvoi d'une largeur future ajustée pour la représentation du flux de données (12) associé à l'élément (20), sur la base des exigences de largeur,
- définition de la largeur de la représentation du flux de données (12) associé à l'élément (20) dans l'élément sur la base de la largeur future ajustée renvoyée,
- modification, à la largeur définie, de la largeur de la représentation de tous les flux de données (12) représentés dans la colonne (16).

9. Procédé selon l'une des revendications précédentes, l'élément (20) étant associé à une autre première et une autre deuxième structure arborescente afin de représenter des flux de données (12) et/ou
le procédé comprenant en outre les étapes suivantes:
- association de l'élément (20) à une autre première structure arborescente et à une autre deuxième structure arborescente afin de représenter des flux de données (12), et
- représentation des flux de données (12) sur la base des autres première et deuxième structures arborescentes dans un agencement de type tableau supplémentaire (18) à l'intérieur d'une cellule de l'agencement de type tableau (10).

10. Procédé selon l'une des revendications précédentes, le procédé comprenant en outre les étapes suivantes:
- transmission continue des données par l'appareil de commande pour des flux de données (12) associés à un élément (20),
- mise à jour de la représentation des flux de données (12) dans la zone d'affichage dans l'agencement de type tableau (10), sur la base des données transmises.

11. Procédé selon l'une des revendications précédentes, la zone d'affichage étant utilisée pour représenter les flux de données (12) d'instruments de données de mesure pour des données de mesure en temps réel dans des applications « matériel dans la boucle ».
